# EUROPEAN PATENT SPECIFICATION

(11) **EP 1 848 764 B1**
(45) Date of publication and mention of the grant of the patent: **21.10.2009**
(21) Application number: 06712859.5
(22) Date of filing: 26.01.2006
(51) Int. Cl.: C08K 5/00, C08L 25/00

(54) **THERMOPLASTIC ELASTOMER COMPOSITION FOR VEHICLE WINDOW-MOLDING**
THERMOPLASTISCHES ELASTOMER ENTHALTENDE ZUSAMMENSETZUNG FÜR FAHRZEUGFENSTER-FORMTEIL
COMPOSITION ELASTOMERE THERMOPLASTIQUE POUR MOULAGE DE FENETRE DE VEHICULE

(30) Priority: 27.01.2005 JP 2005019640
(43) Date of publication of application: 31.10.2007
(73) Proprietor: Dow Corning Toray Co., Ltd., Tokyo 100-0005 (JP)
(72) Inventor: FURUKAWA, Haruhiko, n, Ichihara-shi, Chiba, 2990108 (JP); IRIE, Masakazu, n, Ichihara-shi, Chiba, 2990108 (JP)
(74) Representative: Gillard, Richard Edward
(86) International application number: PCT/JP2006/301716
(87) International publication number: WO 2006/080560

(56) References cited:
- EP-A- 0 509 535
- EP-A- 1 312 639
- WO-A-87/02684
- WO-A-92/04413
- DE-A1- 3 445 856
- US-A- 4 341 879
- US-A- 4 897 440
- US-A- 5 484 848
- US-A1- 2003 116 750
- US-B1- 6 395 810

## Description

### Technical Field

The present invention relates to a thermoplastic elastomer composition for a vehicle window-molding and to a glass panel molding assembly for a vehicle.

### Background Art

Normally a window glass panel of a vehicle is integrally connected to a resin-made or rubber-made window frame that is placed between the glass panel and a vehicle body. The window frame has a function to seal gaps between the glass panel and the vehicle body and, if necessary, may also have a decorative function. The frame material that has such a function is normally called "molding", "frame material", "gasket", "mold", etc.
Heretofore in the majority of cases, polyvinyl chloride was used as a material for such vehicle window-moldings because of its good moldability and scratch-resistant properties.
Recently, however, for the benefits of environmental protection and treatment of production waste, it has been proposed to use preferably olefin-type or styrene-type thermoplastic elastomers; and compositions prepared therefrom (see Japanese Unexamined Patent Application Publication (hereinafter Kokai) 2004-195717 and Japanese Examined Patent Application Publication (hereinafter Kokoku) H06-15185).

It should be noted that there is a tendency in the design of vehicles of recent years to provide a feeling of integrity between the vehicle body and the moldings. However, as compared to polyvinyl chlorides, thermoplastic elastomers are generally characterized by lower surface gloss and, therefore, moldings made from thermoplastic elastomers lack the feeling of integrity and good appearance.
Furthermore, the aforementioned thermoplastic elastomers are low in polarity and adhesive properties and therefore cannot be easily bonded to glass panels. Moreover, they are also inferior to polyvinyl chlorides with regard to abrasion resistance and mechanical characteristics, and normally it is difficult to satisfy the above properties along with appropriate gloss characteristics.

On the other hand, it is required that vehicle window-moldings possess excellent characteristics with regard to environmental protection, gloss, appearance, adhesive properties, resistance to chemicals, abrasion resistance, moldability, mechanical properties, etc. However, the existing thermoplastic elastomers are not perfect regarding gloss, abrasion resistance, etc:, and cannot satisfy all the aforementioned properties simultaneously without violating the balance.

### Disclosure of Invention

It is an object of the present invention to provide a thermoplastic elastomer composition for vehicle window-moldings that satisfies the requirements of moldings used in today's vehicles, and more specifically to provide such a thermoplastic elastomer composition for vehicle window-moldings that possesses properties of environmental protection, gloss, appearance, adhesive properties, resistance to chemicals, abrasion resistance, moldability, mechanical characteristics, etc. It is another object to provide a glass panel molding assembly for a vehicle that utilizes the aforementioned composition.

The present invention provides a thermoplastic elastomer composition for a vehicle window-molding comprising:
(a) 100 parts by mass of a styrene-type thermoplastic elastomer having a number-average molecular weight equal to or greater than 100,000;
(b) 30 to 300 parts by mass of a non-aromatic rubber softener;
(c) 5 to 150 parts by mass of a polyolefin-type resin;
(d) 5 to 200 parts by mass of a polyphenylene ether-type resin; and
(e) 0 to 750 parts by mass of an inorganic filler.

It is preferable that the aforementioned thermoplastic elastomer composition for a vehicle window-molding further comprise (f) 0.01 to 20 parts by mass of a polyorganosiloxane per 100 parts by mass of said thermoplastic elastomer composition.

It is preferable that the aforementioned thermoplastic elastomer composition for a vehicle window-molding further comprise (g) 0.1 to 50 parts by mass of a polyurethane-type resin per 100 parts by mass of said thermoplastic elastomer composition.

It is preferable that in the aforementioned thermoplastic elastomer composition for a vehicle window-molding the styrene-type thermoplastic elastomer (a) consists of hard blocks composed mainly of styrene-type monomer units and soft blocks composed mainly of conjugated diene monomer units, wherein the soft blocks consist mainly of butadiene units and/or isoprene units.

It is preferable that the aforementioned thermoplastic elastomer composition for a vehicle window-molding has the non-aromatic rubber softener (b) in the form of a paraffin-type process oil:

It is preferable that the aforementioned thermoplastic elastomer composition for a vehicle window-molding has the polyolefin-type resin (c) in the form of a polypropylene or a propylene-ethylene copolymer.

It is preferable that in the aforementioned thermoplastic elastomer composition for a vehicle window-molding the polyphenylene ether-type resin (d) has an intrinsic viscosity from 0.08 to 0.90 g/dl.

It is preferable that in the aforementioned thermoplastic elastomer composition for a vehicle window-molding the polyphenylene ether-type resin (d) is poly(2,6-dimethyl-1,4-phenylene ether).

It is preferable that in the thermoplastic elastomer composition for a vehicle window-molding the inorganic filler (e) is calcium carbonate and/or talc.

It is recommended that in the thermoplastic elastomer composition for a vehicle window-molding the polyorganosiloxane (f) is a polydiorganosiloxane.

It is recommended that in the thermoplastic elastomer composition for a vehicle window-molding the polyurethane-type resin (g) is a thermoplastic polyurethane resin obtained through a reaction between a polymeric diol, a diisocyanate, and a chain extender.

It is recommended that in the thermoplastic elastomer composition for a vehicle window-molding the polyurethane-type resin (g) is a block copolymer and/or hydrogenation of the copolymer comprising hard blocks that mainly consist of styrene units, soft blocks that mainly consist of butadiene units and/or isoprene units, and polyurethane blocks.

Furthermore, the present invention provides a glass panel molding assembly for a vehicle, wherein the aforementioned molding is integrally connected through a layer of an adhesive agent to a peripheral edge portion of a glass panel and wherein the molding is a product molded from the vehicle window-molding thermoplastic elastomer composition according to any of the previously mentioned items.

The thermoplastic elastomer composition of the invention for vehicle window-moldings provides a vehicle window-molding material that cannot be obtained with the use of the heretofore-known thermoplastic elastomer compositions. This new material combines excellent gloss, appearance, abrasion resistance, and adhesive properties. It is also equal to or superior to conventional thermoplastic elastomers of this class in resistance to chemicals and mechanical characteristics. Therefore, the glass panel molding assembly for a vehicle that utilizes the aforementioned material can be realized with the same appearance as vehicle glass panel molding assemblies made from polyvinyl chloride. However, as compared to glass panel molding assemblies made from polyvinyl chloride, the glass panel molding assembly of the invention is superior from the point of view of environmental protection and waste processing properties.

### Brief Description of Drawings

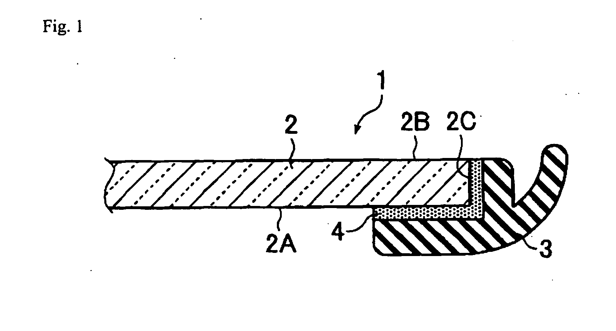

Fig. 1 is a sectional view that illustrates an example of a glass panel molding assembly produced with the use of a thermoplastic elastomer composition of the invention.
Best Mode for Carrying Out the Invention

The thermoplastic elastomer composition of the invention for manufacturing vehicle window-moldings is comprised essentially of the following components: (a) a styrene-type thermoplastic elastomer having a number-average molecular weight equal to or greater than 100,000; (b) a non-aromatic rubber softener; (c) a polyolefin-type resin; and (d) a polyphenylene ether-type resin. If necessary, the composition that contains the aforementioned basic components may be additionally compounded with (e) an inorganic filler, (f) a polyorganosiloxane, and (g) a polyurethane-type resin. Each of these components will be further and separately considered in more detail.

### [Styrene-type Thermoplastic Elastomer (a)]

It is preferable that the styrene-type thermoplastic elastomer (a), that constitutes a component of the thermoplastic elastomer composition of the invention, is a block copolymer that contains hard blocks A composed mainly of styrene-type monomer units and soft blocks B composed mainly of conjugated diene-type monomer units, and/or products of hydrogenation of the aforementioned copolymer. The aforementioned soft block B is preferably a soft block that is composed mainly of butadiene units and/or isoprene units, and/or a soft block obtained through hydrogenation of the aforementioned copolymer. The aforementioned blocks can be bonded linearly, in a branched manner, radially, or by combining any of these bonding methods. However, linear bonding is preferable. For example, this can be a tri-block copolymer such as A-B-A, a tetra-block copolymer such as A-B-A-B, a penta-block copolymer such as A-B-A-B-A, or the like. For ease of production, it is recommended that a tri-block copolymer of A-B-A type be used since a product obtained by using the thermoplastic elastomer composition prepared from such a copolymer is characterized by softness and rubber elasticity. It is understood that there are no special restrictions with regard to the patterns of bonding, number of blocks, types of monomers, etc.

It is recommended that hard blocks A be contained in an amount of 5 to 60 mass %, preferably 20 to 50 mass %, of the entire styrene-type thermoplastic elastomer (a). It is also recommended that the soft blocks B be contained in an amount of 40 to 95 mass %, preferably 50 to 80 mass %, of the entire styrene-type thermoplastic elastomer (a).
From the viewpoint of improved thermal resistance, it is recommended that hard block A, which is composed mainly of styrene-type monomer units, constitute a block that consists of a single polymer or a copolymer composed of styrene-type monomer units in an amount equal to or greater than 50 mass %, preferably equal to or greater than 70 mass %, in combination with other arbitrary components (such as those consisting of e.g., conjugated diene-type monomer units). From the viewpoint of improved rubber elasticity, it is recommended that the soft block B, which is composed mainly of conjugated diene-type monomer units, constitute a block that consists of a single polymer or a copolymer composed of conjugated diene-type monomer units in an amount equal to or greater than 50 mass % and preferably equal to or greater than 70 mass %, in combination with other arbitrary components (such as those consisting e.g., styrene-type monomer units). From the view point of better balance between such characteristics as resistance to heat and hardness, rubber elasticity and other mechanical properties, it is recommended that the styrene-type thermoplastic elastomer (a) as a whole contain 5 to 60 mass %, preferably 20 to 50 mass % of the styrene-type monomer units and 40 to 95 mass %, preferably 50 to 80 mass % of the conjugated diene-type monomer units.

In molecular chains of hard blocks A that are composed mainly of styrene-type monomer units and in molecular chains of soft blocks B that are composed mainly of conjugated diene-type monomer units, the aforementioned conjugated diene-type monomers and styrene-type monomers may have a random distribution, a tapered distribution (one wherein the monomer component is increased or decreased along the molecular chain), a partial block distribution, or any combinations of these. When there are two or more hard blocks A that composed mainly of styrene-type monomer units as their constitutional component, or two or more soft blocks B that composed mainly of conjugated diene-type monomer units as their constitutional component, the structures thereof may be the same or different.

The styrene-type monomer, which is one of the starting materials used in the production of styrene-type thermoplastic elastomer (a), may be exemplified by the following: styrene, α-methylstyrene, o-methylstyrene, m-methylstyrene, p-methylstyrene, p-t-butylstyrene, 2,4-dimethylstyrene, 2,4,6-trimethylstyrene, monofluorostyrene, monochlorostyrene, dichlorostyrene, etc. These monomers can be used individually or in combinations of two or more. Most preferable is styrene.

The conjugated diene-type monomer, which is another starting material used in the production of styrene-type thermoplastic elastomer (a), can be exemplified by the following: 1,3-butadiene, isoprene, 1,3-pentadiene, 2,3-dimethyl-1,3-butadiene, 1,3-hexadiene, etc. These monomers can be used individually or in combinations of two or more. Most preferable are 1,3-butadiene and isoprene, or combinations thereof. Soft block B that consists mainly of conjugated diene-type monomer units may have an arbitrary microstructure. For example, when soft block B is composed of both 1,3-butadiene and isoprene, in order to obtain an appropriate rubber elasticity at room temperature, it is recommended that the 1, 2-microstructures (i.e., structural units formed as a result of addition polymerization between positions 1 and 2) constitute 20 to 50 mole %, preferably 25 to 45 mole %, of the butadiene block and it is preferable that the 1, 4-microstructures (i.e., structural units are formed as a result of addition polymerization between positions 1 and 4) constitute 70 to 100 mole % of the isoprene unit.

From the point of view of improved heat-resistant properties and weatherproofing properties, it is recommended that in the aforementioned styrene-type thermoplastic elastomers a part or all carbon-carbon double bonds on the basis of the conjugated diene-type monomers be hydrogenated. It is most preferable if the degree of hydrogenation of the aforementioned carbon-carbon double bonds exceeds 85 mole %, and preferably more than 90 mole %.

It is recommended that the number-average molecular weight of aforementioned styrene-type thermoplastic elastomer (a) be equal to or greater than 100,000, preferably equal to or greater than 150,000. In terms of the present invention, the number-average molecular weight is determined as a molecular weight referenced to polystyrene and measured by gel permeation chromatography (GPC). If the number-average molecular weight is below the aforementioned recommended lower limit, the obtained thermoplastic elastomer composition will not possess heat-resistant property when this property is defined as a permanent deformation at compression in treating the elastomer at 70°C. If, on the other hand, the number-average molecular weight exceeds 500,000, this will impair moldability of the obtained thermoplastic elastomer composition. Therefore, the most preferable range for the number-average molecular weight is from 150,000 to 370,000.

Styrene-type thermoplastic elastomer (a) may be produced in a number of different processes, but the most typical process is the one that is described, e.g., in Kokoku S40-23798, where the aforementioned elastomer is obtained by using a lithium or a Ziegler catalyst and conducting block polymerization in an inert medium. Methods of hydrogenation are known in the art. Hydrogenated block copolymers are also available commercially.

### [(b) Non-Aromatic Rubber Softener]

Non-aromatic rubber softener (b) that constitutes a component of the thermoplastic elastomer composition of the invention is used for imparting to the obtained composition such properties as softness and rubber elasticity. Any of conventional non-aromatic rubber softeners are suitable for the purposes of the present invention. Most suitable among them are non-aromatic type mineral oils and oily or low-molecular-weight synthetic softeners (b). The aforementioned non-aromatic rubber softeners (b) of different types can be used individually or in combinations of two or more. Normally, a mineral oil type rubber softener that is known as a process oil or extender oil and is used for softening, volume increasing, or improving processing of the rubber is prepared as a mixture of aromatic compounds, naphthene-type compounds, and paraffin-type compounds. If among all carbon atoms present in the oil those that are contained in paraffin chains occupy equal to or greater than 50%, such process oil is called a paraffin-type process oil; if the amount of carbon atoms contained in naphthene rings occupy 30 to 45% of all carbon atoms, such oil is called a naphthene-type process oil; and if the amount of carbon atoms contained in aromatic rings occupy more than 30% of all carbon atoms, such a process oil is called an aromatic-type process oil.

The process oils that are used in the composition of the invention are paraffin-type process oils and naphthene-type process oils. Other oils that can be used are white oils, mineral oils, low-molecular-weight copolymers (oligomers) of ethylene and α-olefins, paraffin waxes, liquid paraffin, etc. Among these, preferable are paraffin-type process oils and/or naphthene-type process oils, of which the paraffin-type process oils are most preferable, and among the paraffin-type process oils the most preferable are those that have a smaller content of components with aromatic rings. The use of an aromatic rubber softener such as an aromatic process oil is not recommended since it damages hard blocks A contained in the styrene-type thermoplastic elastomer (a) and composed of styrene-type monomer units, whereby the obtained composition becomes insufficient in mechanical strength and rubber elasticity.

It is required that aforementioned non-aromatic rubber softener (b) be used in an amount of 30 to 300 parts by mass, preferably 50 to 250 parts by mass, and even more preferably 75 to 200 parts by mass relative to 100 parts by mass of styrene-type thermoplastic elastomer (a). If aforementioned non-aromatic rubber softener (b) is used in an amount less than 30 parts by mass, the thermoplastic elastomer composition is obtained with insufficient softness and low moldability. If, on the other hand, softener (b) is used in an amount exceeding 300 parts by mass, this leads to decrease in mechanical strength of the thermoplastic elastomer composition. Furthermore, non-aromatic rubber softener (b) may bleed-out to the surface of the molded product.

### [(c) Polyolefin-Type Resin]

Polyolefin-type resin (c), which is a component of the thermoplastic elastomer of the proposed composition, may comprise an olefin polymer or copolymer. Polyolefin-type resin (c) used in the composition should have a melt flow rate (JIS K7210) of 0.01 to 100 g/10 min., preferably 0.05 to 80 g/10 min., and even more preferably 0.1 to 60 g/10 min. This characteristic is measured at 190°C if the melting peak temperature determined by means of a differential scanning calorimeter (DCS) is less than 130°C and at 230°C if the melting peak temperature is equal to or greater than 130°C. The modulus of elasticity in bending should be within the range of 10 to 2,500 MPa, preferably within the range of 100 to 2,000 MPa.

Specific examples of aforementioned polyolefin-type resins are ethylene-type polymers, propylene-type polymers, and other polyolefin-type polymers that are described below. Preferable among these are ethylene-type polymers and propylene-type polymers, and the most preferable are propylene-type polymers. Those copolymers that are composed of the same monomer units and that have a higher content of respective monomers will be described first in subsequent examples. The ethylene-type polymer can be exemplified, e.g., by high-density, medium-density, or low-density polyethylene, ethylene/propylene copolymer, ethylenelbutene-1 copolymer, ethylene/hexene copolymer, ethylene/heptene copolymer, ethylene/octene copolymer, ethylene-4/methylpentene copolymer, ethylene/vinyl acetate copolymer, ethylene/acrylic acid copolymer, ethylene/acrylic acid ester copolymer, ethylene/methacrylic acid copolymer, ethylene/methacrylic acid ester copolymer, or similar copolymers with a high content of ethylene. The propylene-type polymer can be exemplified by polypropylene, propylene/ethylene copolymer, propylene/butene-1 copolymer, propylene/ethylene/butene-1 copolymer, and propylene/4-methylpentene-1 copolymer. Most preferable among the aforementioned propylene-type polymers are polypropylene and propylene/ethylene copolymer. Polybutene-1 and poly-4-methylpentene-1 can be mentioned among other polyolefin-type polymers.

The aforementioned polyolefin-type resin (c) should be used in an amount of 5 to 150 parts by mass, preferably 10 to 100 parts by mass per 100 parts by mass of styrene-type thermoplastic elastomer (a). If the aforementioned polyolefin-type resin (c) is used in an amount less than 5 parts by mass per 100 parts by mass of styrene-type thermoplastic elastomer (a), this will impair heat-resistant properties of the obtained thermoplastic elastomer composition and will also worsen moldability of the composition. If, on the other hand, the content of resin (c) exceeds 150 parts by mass, this will increase hardness of the obtained thermoplastic elastomer composition, resulting in loss of desirable softness.

### [(d) Polyphenylene Ether Type Resin]

The polyphenylene ether type resin that constitutes component (d) of the thermoplastic elastomer composition of the present invention is used for improving balance between heat-resistance and oil-resistance properties of the obtained thermoplastic elastomer composition. It is recommended that, when measured at 30°C, the intrinsic viscosity of the aforementioned polyphenylene ether type resin (d) is within the range of 0.08 to 0.90 g/dl, and preferably within the range of 0.20 to 0.70 g/dl. If the intrinsic viscosity of the resin is less than 0.08 g/dl, the obtained thermoplastic elastomer composition may have insufficient thermal resistance. If, on the other hand, the intrinsic viscosity exceeds 0.90 g/dl, the obtained thermoplastic elastomer composition may have an increased melt viscosity and will have poor moldability.

Aforementioned polyphenylene-ether type resin (d) should be used in an amount of 5 to 200 parts by mass, preferably 10 to 100 parts by mass per 100 parts by mass of styrene-type thermoplastic elastomer (a). If the aforementioned polyphenylene-ether type resin (d) is used in an amount less than 5 parts by mass per 100 parts by mass of styrene-type thermoplastic elastomer (a), the effect of improvement in heat-resistance properties of the obtained thermoplastic elastomer composition will be too low. If, on the other hand, the amount of resin (d) exceeds 200 parts by mass, the obtained thermoplastic elastomer composition will have an increased hardness and will lose its rubber elasticity. Therefore, the most preferable range for the content of resin (d) is 10 to 70 parts by mass.

There are no special limitations with regard to the processes that can be used for manufacturing the aforementioned polyphenylene-ether type resin (d). For example, it can be produced by oxidation polymerization of 2,6-dimethylphenol or a similar phenol (monomer) in an atmosphere of an inert gas such as nitrogen, with the use of a catalyst such as a complex of di-n-butylamine or a similar amine and a copper salt such as cuprous chloride (copper (1) chloride), and in a mixed organic solvent composed of toluene, n-butanol, methanol, or the like.

The following are examples of phenols that constitute monomer units from which polyphenylene ether type resin (d) is composed: 2,6-dimethylphenol, 2,6-diethylphenol, 2,6-dibutylphenol, 2,6-dilaurylphenol, 2,6-dipropylphenol, 2,6-diphenylphenol, 2-methyl-6-ethylphenol, 2-methyl-6-cyclohexylphenol, 2-methyl-6-tolylphenol, 2-methyl-6-methoxyphenol, 2-methyl-6-butylphenol, 2,6-dimethoxyphenol, 2,3,6-trimethylphenol, 2,3,5,6-tetramethylphenol, 2,6-diethoxyphenol, etc. The aforementioned phenol units can be of one type and polymerized, or two or more types and copolymerized.

The following are examples of preferable polyphenylene ether type resins (d): poly(2,6-dimethyl-1,4-phenylene ether), poly(2,6-diethyl-1,4-phenylene ether), poly(2-methyl-6-ethyl-1,4-phenylene ether), poly(2-methyl-6-propyl-1,4-phenylene ether), poly(2,6-dipropyl-1,4-phenylene ether), poly(2-ethyl-6-propyl-1,4-phenylene ether), etc. Most preferable of these is poly(2,6-dimethyl-1,4-phenylene ether). The aforementioned polyphenylene ether resins (d) may also include copolymers that partially contain alkyl tri-substituted phenol units such as 2,3,6-trimethylphenol, etc. Preferable among the aforementioned polyphenylene ether resins (d) are copolymers graft-polymerized with styrene, α-methyl styrene, vinyltoluene, chlorostyrene, or a similar styrene-type monomer. Polyphenylene ether type resins (d) that known in the art can be used.

### [(e) Inorganic Filler]

If necessary, the thermoplastic elastomer composition of the invention may contain organic filler (e). The inorganic filler improves thermal resistance, weather resistance, and other physical properties of a molded product while an increase in the amount of the filler reduces the cost of the product. Aforementioned inorganic filler (e) may be comprised of calcium carbonate, talc, magnesium hydroxide, aluminum hydroxide, mica, clay, barium sulfate, natural silicic acid, synthetic silicic acid (white carbon), titanium oxide, carbon black, etc. These fillers can be used individually or in a mixture of two or more. Inorganic fillers (e) can be used in an untreated state or can be preliminarily surface-treated with fatty acids, silane couplings, etc. For improving appearance, strength, cost reduction, and other useful properties, the thermoplastic elastomer composition of the invention can also be combined with calcium carbonate and talc, and especially with ground calcium carbonate.
It is recommended to add the aforementioned inorganic filler (e) in an amount of 0 to 750 parts by mass, preferably 10 to 600 parts by mass, and even more preferably, 50 to 450 parts by mass per 100 parts by mass of styrene-type thermoplastic elastomer (a). If the added amount of the filler exceeds 750 parts by mass, this will impair mechanical strength of the obtained thermoplastic elastomer composition and will increase hardness, resulting in loss of desirable softness.

### [(f) Polyorganosiloxane]

It is recommended that the thermoplastic elastomer composition of the invention contain polyorganosiloxane (f). This component improves abrasion resistance of the product. The aforementioned polyorganosiloxane (f) may be comprised of polyorganosiloxane represented by the following average unit formula (1). It is preferable to use polyorganosiloxane in the form of polydiorganosiloxane.

R¹ₐSiO_{(4-a)/2} (1)

(where R¹ is a univalent hydrocarbon group or a halogen-substituted univalent hydrocarbon group; and "a" is a positive number from 1.8 to 2.2).

The following are examples of the aforementioned univalent hydrocarbon groups: methyl, ethyl, propyl, butyl, hexyl, or similar alkyl groups with 1 to 6 carbon atoms; cyclopentyl, cyclohexyl, cyclooctyl, or similar cyclic alkyl groups with 5 to 12 carbon atoms; phenyl, xylyl, naphthyl, or similar aryl groups with 6 to 10 carbon atoms; benzyl, phenethyl, 3-phenylpropyl, or similar aralkyl groups with 7 to 10 carbon atoms. Of these, most preferable are alkyl groups, especially methyl groups.
The halogen-substituted univalent hydrocarbon groups can be represented by 3,3,3-trifluoropropyl groups, 3-chloropropyl groups, etc. The aforementioned hydrocarbon groups can be partially substituted with amino, epoxy, or similar organic groups.

The aforementioned polyorganosiloxanes can be exemplified by polydimethylsiloxane, dimethylsiloxane/diphenylsiloxane copolymer, dimethylsiloxane/methylphenylsiloxane copolymer, polydimethyl/methyloctylsiloxane, polydimethyl/methyl (3,3,3-trifluoropropyl) siloxane, etc. Most preferable is polydimethylsiloxane.

There are no special restrictions with regard to kinematic viscosity of aforementioned polyorganosiloxane (f). However, in order to prevent stickiness that may result from bleeding of the polyorganosiloxane to the surface of the product and to improve abrasion resistance, the higher value of kinematic viscosity is preferable. More specifically, it is recommended that kinematic viscosity at 25°C be equal to or greater than 100,000 mm²/sec, preferably equal to or greater than 4,000,000 mm²/sec, and that the viscosity be similar to that inherent in conventional gums. To achieve a good balance between bleeding and scratch-resistant properties, the aforementioned highly viscous polyorganosiloxanes (f) can be combined with low-viscous polyorganosiloxanes that have kinematic viscosity at 25°C be equal to or less than 100,000 mm²/sec.

The aforementioned polyorganosiloxanes (f) can be produced, e.g., by hydrolyzing appropriate organosilanes to obtain siloxane oligomers and then polymerizing the obtained product with the use of alkali metal catalysts.
It is recommended to use the aforementioned polyorganosiloxane (f) in an amount of 0.01 to 20 parts by mass, and preferably 0.1 to 10 parts by mass per 100 parts by mass of the thermoplastic elastomer composition consisting of aforementioned components (a) through (e). If aforementioned polyorganosiloxane (f) is contained in an amount less than 0.01, this will not provide sufficient improvement in abrasion resistance properties. If, on the other hand, it is contained in an amount more than 20 parts by mass, this will make the surface of the product sticky because of bleeding of the polyorganosiloxane to the product surface.

### [(g) Polyurethane-Type Resin]

It is recommended that the thermoplastic elastomer composition of the invention contain polyurethane-type resin (g). This component improves scratch-resistant properties on the surface of the product molded from the thermoplastic elastomer composition.
There are no special restrictions with regard to the types of polyurethane-type resin (g) that can be used for the purposes of the invention, provided that it has urethane bonds. For example, the following resins can be used as this component:
- Polyurethane-type resin (g1) This is a thermoplastic polyurethane resin obtained by causing a reaction between a polymeric diol, a diisocyanate, and a chain extender;
- Polyurethane-type resin (g2): This is a polyurethane-type resin wherein the below-described addition polymerization block E is bonded to polyurethane block F directly, through a urethane bond, an ester bond, or a similar chemical bond.
   The aforementioned polyurethane-type resins can be used individually or in combinations.

For obtaining improved mechanical characteristics, heat-resistant properties, frost-resistance properties, and elastic recovery properties in the thermoplastic elastomer composition of the invention that contains polyurethane-type resin (g), the polymeric diols used for the manufacture of polyurethane-type resin (g1) should have a number-average molecular weight in the range of 1,000 to 6,000. The number-average molecular weight of the polymeric diol is calculated on the basis of a hydroxyl value measured in accordance with JIS K1557.
The polymeric diol can be exemplified by polyester diol, polyether diol, polyester ether diol, polycarbonate diol, polyester carbonate diol, etc. These diols can be used individually or in combinations of two or more. If necessary, the aforementioned polymeric diols can be combined with small amount of trihydric or higher polyhydric polyols having high-molecular weight.

The aforementioned polyester diols can be exemplified by the one obtained as a result of a reaction between a diol compound having low molecular weight and at least one dicarboxylic acid component selected from aliphatic dicarboxylic acid, aromatic dicarboxylic acid, or their ester-forming derivatives, as well as by a polyester diol obtained by ring-opening polymerization of lactone.
The following are specific examples of the aforementioned polyester diols: polyester diol obtained as a result of a polycondensation reaction between (1) glutalic acid, adipic acid, pimelic acid, suberic acid, azelaic acid, sebacic acid, dodecane diacid, or a similar aromatic dicarboxylic acid or similar one or more types of ester-forming derivatives thereof, and (2) ethylene glycol, propylene glycol, 1,4-butadiol, 1,5-pentane diol, 3-methyl-1,5-pentane diol, 1,6-hexane diol, 1,9-nonane diol, 2-methyl-1,8-octane diol, or one or more types of other aliphatic diols having 2 to 10 carbon atoms; polycaprolactone diol; polyvalerolactone diol, etc.

The aforementioned polyether diols can be represented by polyethylene glycol, polypropylene glycol, polytetramethylene glycol, etc.
Furthermore, the aforementioned polycarbonate diol may be one obtained by reacting 1,4-butane diol, 1,5-pentane diol, 1,6-hexane diol, 1,8-octane diol, or by one or more types of other aliphatic diols with diphenylcarbonate, dialkylcarbonate, or similar carbonates or phosgene.

There are no special restrictions with regard to the types of diisocyanates that can be used in the manufacture of polyurethane-type resin (g1). For example, it can be one or more types of alicyclic diisocyanates, aliphatic diisocyanates, or aromatic diisocyanates with a molecular weight is equal to or less than 500. The diisocyanates can be represented by 4,4'-diphenylmethane diisocyanate, toluenediisocyanate, p-phenylenediisocyanate, naphthalenediisocyanate, hydrogenated 4,4'-diphenylmethanediisocyanate, isophoronediisocyanate, etc. Of these, most preferable is 4,4'-diphenylmethane diisocyanate.

The chain extender used in the manufacture of polyurethane-type resin (g1) may be the one conventionally used for this purpose, and its type is not specifically limited. Such chain extenders may be comprised of one or more types of aliphatic diols, alicyclic diols, or aromatic diols and may be exemplified by the following compounds: ethylene glycol, diethylene glycol, 1,4-butane diol, 1,5-pentane diol, 2-methyl-1,3-propane diol, 1,6-hexane diol, neopentyl diol, 1,9-nonane diol, cyclohexane diol, 1,4-bis(β-hydroxyethoxy) benzene, or similar diols. Among these, most preferable are aliphatic diols having 2 to 6 carbon atoms, in particular, 1,4-butadiol.

Polyurethane-type resin (g1) can be produced by reacting a polymeric diol, a chain extender, and a diisocyanate, and the following proportions can be recommended for obtaining better hardness and chain-extension characteristics;
(mole number of polymeric diol) : (mole number of chain extender) = (1 : 0.2) ∼ (1 : 8.0), and [total mole number of (polymeric diol) + (chain extender)] : [mole number of diisocyanate] = (1 : 0.5) - (1 : 2.0), preferably (1 : 0.95) ∼ (1:1.05).
There are no special restrictions with regard to the hardness of polyurethane-type resin (g1), but it is recommended to have a hardness of 50 to 90 according to JIS-A (at 25°C).

There are no special restrictions with regard to the structure of the addition-polymerization block E that is included in the structure of polyurethane-type resin (g2), but it is recommended that it is an addition-polymerization-type block copolymer and/or a hydrogenate of the copolymer that comprise at least one hard block C composed mainly of styrene-type monomers and at least one soft block D composed mainly of conjugated diene monomers. It is also recommended that addition-polymerization block E contain a functional group such as a hydroxyl group for forming bonds with polyurethane block F.

Hard block C that is included in the structure of addition-polymerization block E may be composed of the same monomer units as those included in the structure of hard block A composed mainly of styrene-type monomer units of styrene-type thermoplastic elastomer (a). Soft block D that is included in the structure of addition-polymerization block E may be composed of the same monomer units as those included in the structure of soft block B composed mainly of conjugated diene-type monomer units of styrene-type thermoplastic elastomer (a). Although there are no special restrictions with regard to the molecular weights of hard block C and soft block D, as well as to a degree of hydrogenation and molecular weight of addition-polymerization block E, it is recommended that these characteristics comply with requirements of the styrene-type thermoplastic elastomer (a) of the present invention.

Polyurethane block F may be composed of the thermoplastic polyurethane resin obtained as a result of a reaction between the aforementioned polymeric diol, a diisocyanate, and a chain extender.
There are no special restrictions with regard to the number of blocks and bonding patterns between addition-polymerization block E and polyurethane block F. For example, this may be a di-block copolymer composed of one addition-polymerization block E and one polyurethane-type block F, tri-block copolymer composed of two addition-polymerization blocks E and one polyurethane block F, etc. The aforementioned di-block copolymer is preferable.
From the point of view of improved compatibility with styrene-type thermoplastic elastomer (a), it is recommended-that the mass ratio of the aforementioned addition-polymerization block E to polyurethane block F be within the range of (1 : 9) ∼ (9 : 1), preferably (2:8) ∼ (8 : 2).

There are no special restrictions with regard to the process used for manufacturing polyurethane-type resin (g2). For example, it may be obtained by extracting and recovering a polyurethane-type block copolymer from a reaction product obtained by mixing under melting conditions such components as addition-polymerization block E having terminal hydroxyl groups and polyurethane block F.
Polyurethane-type resin (g2) is commercially produced by Kuraray under the trade name "TU Polymer Kuramiron".

It is recommended to use polyurethane-type resin (g) in an amount of 0.1 to 50 parts by mass, preferably 1 to 50 parts by mass per 100 parts by mass of the thermoplastic elastomer composition comprised of aforementioned components (a) through (e). If it is used in an amount less than 0.1, it will be difficult to improve abrasion resistance properties. If, on the other hand, it is used in an amount exceeding 50 parts by mass, this will impair moldability of the thermoplastic elastomer composition and dimensional stability of the molded product.

### [Other Components]

If necessary, the above-described thermoplastic elastomer composition of the present invention can be additionally combined with reinforcing resins such as α-methylstyrene, flame retardants, antioxidants, ultraviolet-ray absorbers, light stabilizers, antistatics, mold-release agents, foaming agents, pigments, dyes, brightening agents, abrasion resistance agents, etc. These additives can be used in conventional proportions.

### [Preparation of Thermoplastic Elastomer Composition]

The thermoplastic elastomer composition of the invention can be prepared by mechanically melting and mixing the aforementioned components. Equipment that can be used for this purpose may be comprised of a single-screw extruder, biaxial extruder, Brabender plastograph, Banbury mixer, kneader blender, roller mills, etc. It is recommended that melting and mixing are carried out at a temperature from 145°C to 300°C.

It is recommended that the thermoplastic elastomer of the invention have a melt flow rate (230°C, 2.16 kgf) within the range of 0.5 to 10 g/10 min. If the flow rate is less than 0.5 g/10 min, this may cause the so-called shot-shot problem during molding to a large glass plate panel. On the other hand, if the flow rate exceeds 10 g/10 min, this will create an extreme flow resulting in the formation of voids and pockets in the mold and burrs on the molded product that will spoil its appearance. Furthermore, this will impair mechanical properties of the product.
It is recommended that the hardness of the composition, in terms of Shore A scale, be within the range of 40 to 95, preferably 50 to 90. It is also recommended that the tensile strength of the composition have an average value equal to or greater than 5 MPa and more preferably equal to or greater than 7 MPa, and that the 100% modulus of elasticity be equal to or greater than 2 MPa. It is also recommended that the elongation at stretching be equal to or greater than 400%, the tear strength be equal to or greater than 30 N/mm, and the permanent deformation is less than 50% in the case of 25% compression at 70°C for 22 hours. In order to obtain the feel of integrity with the body of a vehicle, it is recommended that the surface gloss be equal to or greater than 10, preferably equal to or greater than 15. Higher surface gloss will be preferable as long as the vehicle window-molding satisfies the requirements of mechanical characteristics. Furthermore, it is recommended that the resistance to chemicals provide a mass change rate equal to or less than 50% and the adhesion strength to a glass panel be equal to or greater than 100 N/25mm.

### [Glass Panel Molding Assembly]

An example of a glass panel molding assembly of the invention for a vehicle is shown in Figure 1 as a cross-sectional view of the assembly. In this drawing, reference numeral 1 designates a glass panel molding assembly, reference numeral 2 designates a glass panel, 2A designates exterior surface of the glass panel, 2B designates interior surface of the glass panel, 2C designates the end face of the glass panel, 3 designates a molding, and 4 designates an adhesive layer. The glass panel molding assembly 1 comprises an integral unit formed by bonding the molding 3 to the end face 2C and to exterior surface 2A of glass panel 2 through the adhesive layer 4.

### [Manufacturing of the Glass Panel Molding Assembly]

The shape of the molding produced from the thermoplastic elastomer composition of the invention is determined by the function and design requirements of the assembly. For example, apart from the shape shown in Fig. 1, the molding 3 can be attached via the adhesive layer 4 only to exterior surface 2A of the glass panel; or to interior surface 2B, exterior surface 2A, and the end face 2C of the glass panel. Furthermore, the molding may have the same cross section along the entire edge of the glass panel, or the cross section of the molding may be different in various positions on the panel edge. The molding can be integrally connected to the glass panel along the entire periphery or only in specified areas of the panel periphery, or can be integrated only partially.

The thermoplastic elastomer composition of the invention can be formed into a molding by any conventional method, i.e., by injection molding, extrusion, or by any other forming method.

When the glass panel molding assembly is produced by injection molding, for example, the following procedure is preferable;
the glass panel is inserted into a mold having a working chamber essentially of the same shape as the shape of the molding, the mold is closed so that a sealed working cavity is formed between the walls of the chamber and the edge portion of the glass panel, the thermoplastic elastomer composition is injected into the aforementioned working cavity, and after the composition cures, the molding is integrally attached to the periphery of the glass panel. In this case, prior to insertion of the glass panel into the mold, an adhesive agent, that after molding will form the aforementioned adhesive layer, is applied onto the edge of the glass panel intended for connection to the molding.

Furthermore, the thermoplastic elastomer composition can be injection-molded to form a molding in the form of a loop that can be bonded to the entire perimeter of the glass panel edge or in the form for bonding to a part of the glass panel perimeter, e.g., in a U-shape configuration that will be bonded to three sides of the glass panel periphery. In this case, the obtained molding is pressed and bonded to the glass panel edges thus forming an integral unit. Prior to pressing the molding to the edges of the glass panel, the edges may be covered with a double-sided adhesive tape or coated with an adhesive agent, or alternatively, prior to bonding of the molding the adhesive agent can be applied onto the surface of the molding that facing to the glass panel.

In accordance with another method that is known as an extrusion forming method, the thermoplastic elastomer composition can be extruded to a required shape through a die that has substantially the same cross section as the molding. In this case, (a) the molded product can be extruded into a separate product which is applied onto the glass panel directly after extrusion and integrated therewith by pressing the molding to the glass panel edged, or (b) the molding can be applied onto the glass panel edges and integrated therewith by extruding the product directly onto the glass panel edges from the extrusion die.

### [Glass Panel]

A glass panel used for manufacturing the glass panel molding assembly of the invention may have different structures and may comprise, e.g., a laminated structure composed of single inorganic glass plates interposed one onto the other through intermediate films, a reinforced glass panel produced by reinforcement treatment, or a transparent resin plate known as organic glass.
In the area where the adhesive agent layer is formed, the glass panel can be coated with a shading layer of a baked ceramic paste. This shading layer conceals the adhesive layer from the outer side of the vehicle and protects it from ultraviolet rays. When a thermoplastic elastomer composition is used, attachment to the vehicle body is normally performed by means of a urethane-type adhesive, and the use of the shading baked ceramic paste will reduce the effect of ultraviolet rays on the urethane-type adhesive agent.

### [Adhesive Agent]

An adhesive agent is used in the manufacture of the glass panel molding assembly of the invention for improving adhesion of the molding to the glass panel. The adhesive agent used for the purposes of the invention should be the one that provides reliable attachment to the glass plate. This may be a composition that consists of an anhydrous maleic-acid-modified propylene-1-butene copolymer, a polypropylene chloride modified with an anhydrous maleic acid, and an epoxy silane; a composition that contains a propylene chloride, an epoxy-containing compound, and a silane coupling agent; or other similar compositions. For example, the adhesive agent can be prepared by dissolving a polypropylene chloride and trimethylolpropane triglycidyl ether in xylene, adding 3-aminopropyl trimethoxysilane to the obtained solution, and stirring the components.
When the adhesive agent is liquid, it develops an adhesive force after drying even if it was applied onto the glass plate in a very thin layer. In order to form a 10 to 20 µm-thick film after drying, in terms of resin the adhesive agent should be applied in an amount of 15 g/m³.

### [Practical Examples]

The invention will be further described in detail with reference to practical and comparative examples.
Given below are contents and designations of the materials which were used as components of the composition:
(1)(a) Styrene-Type Thermoplastic Elastomers:
   SBC-1: Product of Kuraray Co., Ltd., "Septon 4055", hydrogenated A-B-A type styrene-(isoprene-butadiene) copolymer that contains 30 mass % of component (A) polystyrene and 70 mass % of component (B) poly(isoprene-butadiene); number-average molecular weight: 227,000; degree of hydrogenation: equal to or greater than 90%;
   SBC-2: Product of Kuraray Co., Ltd., "Septon 4077", hydrogenated A-B-A type styrene-(isoprene/butadiene) copolymer that contains 30 mass % of component (A) polystyrene and 70 mass % of component (B) poly(isoprene-butadiene); number-average molecular weight: 325,000; degree of hydrogenation: equal to or greater than 90%;
   SBC-3: Product of Kuraray Co., Ltd., "Septon 4033", hydrogenated A-B-A type styrene-(isoprene/butadiene) copolymer that contains 30 mass % of component (A) polystyrene and 70 mass % of component (B) poly(isoprene-butadiene); number-average molecular weight: 70,000; degree of hydrogenation: equal to or greater than 90%;

(2)(b) Non-Aromatic Rubber Softener:
   OIL: Product of Idemitsu Kosan Co., Ltd., "Diana Process PW-90", paraffin type process oil, equal to or greater than 0.1 mass % content of aromatic components;
(3)(c) Polyolefin-Type Resin:
   PP: Product of Idemitsu Petrochemical Co., Ltd., "Idemitsu PP: J-700GP", polypropylene-type resin, melt flow rate (230°C; 2.16 kgf): 8 g/10 min.;
(4)(d) Polyphenylene-Ether Type Resin:
   PPE: Product of Mitsubishi Engineering Plastics Co., Ltd., "PPE Polymer-YPX-100L", poly(2,6-dimethyl-1,4-phenylene ether), intrinsic viscosity: 0.47 dl/g;

(5)(e) Inorganic Filler:
   Calcium Carbonate: Shiroishi Kogyo Co., Ltd., ground calcium carbonate, "Whiton P-10";
   Carbon MB: Product of Hekisa Chemical Co., Ltd., Carbon Black 40 mass % content of Master Batch, polyolefin grade;
(6)(f) Polyorganosiloxane:
   PDMS: polydimethylsiloxane, kinematic viscosity at 25°C is equal to or greater than 16,000,000 mm²/sec (number-average molecular weight recalculated to polystyrene: 330,000);
(7)(g) Polyurethane-Type Resin:
   (g1) PU: Product of Kuraray Co., Ltd., "Kuramiron-U8165";
   (g2) PU Copolymer: Kuraray Co., Ltd., "Kuramiron-TU-S 5865"
(8) Other Materials (Olefin-Type Thermoplastic Elastomer)
   EBC: Advanced Elastomer Systems Co., Ltd.: "Santopren 121-65M 300".

### (Practical Examples 1-6, Comparative Examples 1 and 2)

(1) Compositions shown in Table 1 and Table 2 were premixed in indicated proportions. Those mixtures were fed to a twin screw extruder (the product of W & P Company, Model ZSK-25), and kneaded in a melting state at barrel temperatures from 200°C to 300°C at a rotation speed of the screw of 300 rpm. The mixtures were extruded into strands which were then cut into pellets of the thermoplastic elastomer composition.

(2) The pellets obtained as described above in Item (1) were used for producing a flat plate A having dimensions of 120 mm (length) x 120 mm (width) x 2 mm (thickness) and a flat plate B having dimensions of 90 mm (length) x 90 mm (width) x 4 mm (thickness). The plates were produced by using the pellets in an injection molding machine (the product of Ergotech Co.: clamping force of 100 tones, melt temperature of 180 to 200°C, mold temperature of 40°C. The mold surface roughness corresponded to #400. A flat plate C having dimensions of 100 mm (length) x 50 mm (width) and 2 mm (thickness) was then produced in an injection molding machine (the product ofNiigata Engineering Co., Ltd.) by using the same pellets that were prepared for the manufacture of plates A and B (clamping force of 300 tones, melt temperature of 180 to 200°C, mold temperature of 40°C). The mold surface roughness corresponded to #400.

Described below are methods that were used for evaluating the above-described flat plates and samples cut from these plates with regard to such properties as hardness, tensile strength, 100% modulus of elasticity, elongation, tear strength, permanent deformation at compression, surface abration-proof properties, resistance to chemicals, surface gloss prior to and after rubbing tests, visual inspection of the surface after rubbing, and surface roughness conditions after rubbing. Adhesive properties were evaluated, as described below, by using a laminate structure obtained by injection molding the composition on the surface of a glass plate having dimensions of 100 mm (length) x 50 mm (width) x 5 mm (thickness). The results of the evaluations are shown Table 1 and Table 2.

### (Comparative Example 3)

A flat plate was produced by the same method as described in Practical Example 1 by using pellets of polyolefin-type thermoplastic elastomer "Santoprene^{™} 121-65M300".
The properties of the obtained plate were evaluated by the same methods as in Practical Example 1. The results of evaluation are shown in Table 2.

### (Methods of Testing, Measuring, and Evaluating)

Described below are the methods used for testing, measuring, and evaluating the properties of the thermoplastic elastomer composition (hardness, tensile strength, 100% modulus of elasticity, elongation, tear strength, permanent deformation at compression, surface abrasion-proof properties, resistance to chemicals, resistance to rubbing, surface gloss, surface roughness, and adhesive properties.
(1) Hardness: This property was measured by stamping out from the aforementioned flat plate A having dimensions of 120 mm (length) x 120 mm (width) x 2 mm (thickness) dumbbell-type specimens (rubber specimens No. 3 according to JIS K6251), and then hardness was measured on the obtained specimens by the method specified in JIS K6253 "Methods of Testing Hardness of Vulcanized and Thermoplastic Rubbers" with the use of a type-A durometer of Shimazu Seisakusho Co., Ltd.

(2) Tensile Strength and Elongation: These properties were measured on the aforementioned dumbbell-type specimens obtained from flat plate A in accordance with the provisions of JIS K6251 (Methods for Testing Tensile Strength of Vulcanized Rubbers) by using an autograph of Shimazu Seisakusho Co., Ltd. Tensile strength at the time of 100% elongation was recorded as 100% modulus [of elasticity].

.
(3) Tear Strength: Crescent-shaped specimens according to JIS K6252 (Methods for Testing Tear Strength of Vulcanized Rubbers) were produced from aforementioned flat plates A, and the tear strength was measured on an autograph of Shimazu Seisakusho Co., Ltd. according to JIS K6252.

(4) Permanent Deformation at Compression: Three disk-shaped specimens (diameter of 29 mm) stamped out from aforementioned flat plate B having dimensions of 90 mm (length) x 90 mm (width) x 4 mm (thickness) were stacked one onto the other, and then measurement of permanent deformation at compression was carried out according to JIS K6262 (Method for Testing Permanent Deformation of Vulcanized and Thermoplastic Rubbers) in 22 hours after 25% compression at 70°C for 22 hours.

(5) Surface Abrasion-Proof Properties: With a thumb inserted into a cotton glove, the surface of aforementioned flat plate A was rubbed five times, and then the surface was visually observed for abrasion. The following criteria were used: no abrasion - "5"; slight abrasion - "4"; abrasion easily observed - "3"; abrasion clearly observed - "2"; significant abrasion - "1".

(6) Resistance to Chemicals: 30 mm x 30 mm samples were cut from aforementioned flat plate C having dimensions of 100 mm (length) x 50 mm (width) x 2 mm (thickness), and then according to JIS K7114 (Method for Testing Plastics by Immersion into Liquid Chemicals), the samples were tested in a constant-temperature oven DK400T (product of Yamato Science Co., Ltd.) by holding them in an immersed state for 4 hours with heating to a test temperature of 70°C ± 2°C in a car wax (the product of SOFT Co., Inc., "Pearl Metallic" (solid form); Carnauba wax, silicone oil, 75 mass % petroleum-type solvent). Resistance to the chemicals was then defined by determining the mass change by precisely weighing three times with a precision balance (trademark "Mettler Toledo") and calculating an average value of three measurements shown in Table 1 and Table 2.

(7) Resistance to Rubbing: This characteristic was measured on aforementioned flat plate C according to JIS L0849 (Color Fastness Test to Rubbing) by applying 5 N force perpendicular to the plate surface and performing multiple reciprocating rubbing strokes for a predetermined number of reciprocation cycles (10 cycles, 50 cycles, and 100 cycles) by using white cotton cloth No.3 (Kanakin No. 3: rubbing cotton cloth) (JIS L0803 Standard Adjacent Fabrics for Staining of Colour Fastness Test). The surface gloss was evaluated before and after the rubbing test and then the surface gloss endurance was evaluated by comparing the original surface gloss with the one obtained after the test. Furthermore, the following criteria were used for evaluating visual inspection of the surface of the specimen after a predetermined number of recprocation cycles: no abrasion observed - "5"; abrasion slightly observed - "4"; abrasion easily observed - "3"; abrasion clearly observed - "2"; significant abrasion - "1". Furthermore, surface roughness of the specimen after a 100-cycle test was measured. The aforementioned test was carried out three times, and the average value of these tests are shown in Table 1 and Table 2.

(8) Surface Gloss: This property was measured on aforementioned flat plate C prior to and after testing the resistance to rubbing. The gloss was measured in accordance with the provisions of JIS Z8741 (Method of Measuring Mirror Surface Gloss) with an incidence angle of 60° by using micro-TRI-gloss tester (product of BYK Gardner).

(9) Surface Roughness: This characteristic was measured in the direction perpendicular to the direction of reciprocations after the 100 cycles rubbing-resistance test on aforementioned flat plate C. Measurements were carried out with the use of a surface-roughness tester (the product of Kosaka Laboratory, Ltd) in a 16 mm area where rubbing with cloth was carried out, and then an average roughness Ra was calculated.

(10) Adhesive Properties: A laminated plate was prepared by applying a layer of adhesive agent only onto an area of 60 mm x 25 mm of a glass plate (150 mm x 25 mm x 5 mm) starting from the edge of the glass plate, then placing the glass plate into a mold and injection molding a thermoplastic elastomer composition onto the adhesive-coated side of the glass plate, thus forming a layer of 150 mm x 25 mm x 3 mm on top of the glass plate. The obtained laminated plate was tested with regard to adhesion properties by measuring the tensile strength according to JIS K6256 (Adhesive Testing Methods for Vulcanized and Thermoplastic Rubbers) on a. tensile tester (the product of Shimazu Seisakusho Co., Ltd, Model AGS-J) with a peeling angle of 180° and at a stretching speed of 200 mm/min. A polyolefin chloride type adhesive agent was used as the adhesive agent.

**[Table 1]**

| | | | | Practical Example No. | | | | |
|---|---|---|---|---|---|---|---|---|
| | | | | 1 | 2 | 3 | 4 | 5 |
| Component Designation (symbol) | | Material Designation (symbol) | | | | | | |
| (a) | | SBC-1 | | 100 | | 100 | 100 | 100 |
| | | SBC-2 | | | 100 | | | |
| | | SBC-3 | | | | | | |
| (b) | | Oil | | 130 | 130 | 130 | 130 | |
| (c) | | PP | | 50 | 50 | 50 | 50 | 50 |
| (d) | | PPE | | 40 | 40 | 40 | 40 | 40 |
| (e) | | Calcium Carbonate | | 140 | 140 | | 140 | 140 |
| | | Carbon MB | | 5 | 5 | 3.5 | 5 | 5 |
| (f) | | PDMS | | | | | 5 | 5 |
| (g) | | PU | | | | | | |
| | | PU Copolymer | | | | | | 25 |

| Properties | | | | | | | | |
|---|---|---|---|---|---|---|---|---|
| Hardness | | | | 69 | 70 | 63 | 68 | 69 |
| Tensile Strength (MPa) | | | | 8.4 | 8.2 | 14.2 | 7.5 | 8.1 |
| 100% Modulus of Elasticity (MPa) | | | | 3.0 | 2.8 | 2.2 | 3.4 | 3.3 |
| Elongation (%) | | | | 720 | 550 | 740 | 610 | 600 |
| Tear Strength (N/mm) | | | | 37 | 36 | 38 | 37 | 40 |
| Permanent Deformation at Compression(%) | | | | 37 | 33 | 34 | 37 | 43 |
| Surface Gloss of Flat Plate | | | | 11.6 | 10.0 | 11.0 | 12.9 | 12.8 |
| Surface Abrasion-Proof Properties of Flat Plate | | | | 3 | 3 | 3 | 4 | 5 |
| Resistance to Chemicals (mass change rate) (%) | | | | 32.8 | - | - | - | 33.3 |
| Surface gloss | 10 cycles of rubbing | | Initial | 12.7 | - | - | - | 27.9 |
| | | | After test | 4.1 | | | | 29.4 |
| | 50 cycles of rubbing | | Initial | 13.6 | | | | 24.9 |
| | | | After test | 3.2 | | | | 28.5 |
| | 100 cycles of rubbing | | Initial | 15.9 | | | | 27.5 |
| | | | After test | 2.4 | | | | 31.1 |
| Visual inspection of the surface after rubbing | 10 cycles of rubbing | | | 3 | - | - | - | 5 |
| | 50 cycles of rubbing | | | 2 | | | | 4 |
| | 100 cycles of rubbing | | | 2 | | | | 4 |
| Surface roughness Ra (µm) after rubbing | 10 cycles of rubbing | | | - | | | | - |
| | 50 cycles of rubbing | | | - | | | | - |
| | 100 cycles of rubbing | | | 0.402 | | | | 0.224 |
| Adhesion (N/25 mm) | Separation through material | | | 230 | - | - | - | 235 |

**[Table 2]**

| | | | | Pr. Ex. 6 | Comp. Ex. 1 | Comp. Ex.2 | Comp Ex.3 |
|---|---|---|---|---|---|---|---|
| Component Designation (symbol) | | Material Designation (symbol) | | | | | |
| (a) | | SBC-1 | | 100 | | 100 | EBC |
| | | SBC-2 | | | | | |
| | | SBC-3 | | | 100 | | |
| (b) | | Oil | | 130 | 130 | 130 | |
| (c) | | PP | | 50 | 50 | 70 | |
| (d) | | PPE | | 40 | 40 | | |
| (e) | | Calcium Carbonate | | 140 | | | |
| | | Carbon MB | | 5 | 3.5 | 3.5 | |
| (f) | | PDMS | | 5 | | | |
| (g) | | PU | | 12.5 | | | |
| | | PU Copolymer | | 12.5 | | | |

| Properties | | | | | | | |
|---|---|---|---|---|---|---|---|
| Hardness | | | | 70 | 60 | 72 | 69 |
| Tensile Strength (MPa) | | | | 8.5 | 4.1 | 13.7 | 6.6 |
| 100% Modulus of Elasticity (MPa) | | | | 3.4 | 2.2 | 2.9 | 2.9 |
| Elongation (%) | | | | 650 | 400 | 860 | 470 |
| Tear Strength (N/mm) | | | | 40 | 25 | 41 | 31 |
| Permanent Deformation at Compression (%) | | | | 43 | 82 | 50 | 41 |
| Surface Gloss of Flat Plate | | | | 12.6 | 48.1 | 11.6 | 3.7 |
| Surface Abrasion-Proof Properties of Flat Plate | | | | 5 | 3 | 3 | 1 |
| Resistance to Chemicals (mass change rate) (%) | | | | - | - | - | 32.4 |
| Surface gloss | 10 cycles of rubbing | | Initial | - | - | - | 5.6 |
| | | | After test | - | - | - | 1.3 |
| | 50 cycles of rubbing | | Initial | - | | | 5.6 |
| | | | After test | | | | 1.0 |
| | 100 cycles of rubbing | | Initial | | | | 5.8 |
| | | | After test | - | - | - | 0.9 |
| Visual inspection of the surface after rubbing | 10 cycles of rubbing | | | - | - | - | 2 |
| | 50 cycles of rubbing | | | | | | 2 |
| | 100 cycles of rubbing | | | | | | 2 |
| Surface roughness Ra (µm) after rubbing | 10 cycles of rubbing | | | - | - | - | - |
| | 50 cycles of rubbing | | | | | | - |
| | 100 cycles of rubbing | | | - | - | - | 0.542 |
| Adhesion (N/25 mm) | Separation through material | | | - | - | - | 99 |

It can be seen from comparison of Practical Examples with Comparative Example 3 that the thermoplastic elastomer composition of the present invention composed of styrene-type thermoplastic elastomer (a), non-aromatic rubber softener (b), olefin-type resin (c), and polyphenylene-ether type resin (d) has equal or superior vehicle window-molding material characteristics to a polyolefin-type thermoplastic elastomer composition with regard to mechanical characteristics such as hardness, tensile strength, 100% modulus of elasticity, elongation, tear strength, and permanent deformation at compression. Furthermore, the thermoplastic elastomer composition of the present invention is superior to the conventional polyolefin-type thermoplastic elastomer also with regard to abrasion resistance.

Comparison of Practical Examples 1 and 5 with Comparative Example 3 shows that the thermoplastic elastomer composition of the present invention provides a higher initial surface gloss than the conventional polyolefin-type thermoplastic composition, and moldings manufactured from the composition of the invention produce better feeling of integrity with the vehicle body. The compositions of Practical Examples 2, 3, 4, and 6 produce initial surface gloss of the same, or of a higher level than the compositions of Practical Examples 1 and 5. Furthermore, the compositions of Practical Examples 1 and 5 demonstrate stronger adhesion to a glass plate than the composition of Comparative Example 3. The composition of Practical Example 5 is superior to the composition of Comparative Example 3 with regard to abrasion resistance and endurance of surface gloss.

When styrene-type thermoplastic elastomer (a) has a number-average molecular weight equal to or grater than 100,000, the compositions of the Practical Examples demonstrate sufficient tensile strength, elongation, tear strength, and permanent deformation at compression relative to Comparison Example 1 and are suitable for use as materials for manufacturing vehicle window-moldings.

Comparison of compositions of the Practical Examples with the composition of Comparative Example 2 shows that when styrene-type thermoplastic elastomer (a) has a number-average molecular weight equal to or grater than 100,000 and when the thermoplastic elastomer composition of the invention contains polyphenylene-type resin (d), it becomes possible to obtain a vehicle window-molding material with excellent characteristic of permanent deformation at compression.

Comparison of compositions of the Practical Examples 1, 2, and 3 with those of Practical Examples 4, 5, and 6 shows that addition of polyorganosiloxane (f) to the thermoplastic elastomer composition that consists of styrene-type thermoplastic elastomer (a), non-aromatic rubber softener (b), olefin-type resin (c), and polyphenylene-ether type resin (d) improves abrasion resistance.

Comparison of compositions of the Practical Examples 5 and 6 with those of other Practical Examples shows that addition of polyorganosiloxane (f) and then polyurethane-type resin (g) to the thermoplastic elastomer composition that consists of styrene-type thermoplastic elastomer (a), non-aromatic rubber softener (b), olefin-type resin (c), and polyphenylene-ether type resin (d) improves abrasion resistance to a still higher level.

### [Reference Numerals Used in the Specification]

- 1: glass panel molding assembly
- 2: glass panel
- 2A: exterior surface of the glass panel
- 2B: exterior surface of the glass panel
- 2C: end-face of the glass panel
- 3: molding
- 4: adhesive layer

### Industrial Applicability

Vehicle window-moldings produced from the thermoplastic elastomer composition of the invention are characterized by attractive appearance and a good balance between properties required for such products and therefore they are suitable for use not only as moldings for such vehicles as cars and trains but also for ships, units of amusement equipment, etc.

## Claims

1. A thermoplastic elastomer composition for a vehicle window-molding comprising:
(a) 100 parts by mass of a styrene-type thermoplastic elastomer having a number-average molecular weight equal to or greater than 100,000;
(b) 30 to 300 parts by mass of a non-aromatic rubber softener;
(c) 5 to 150 parts by mass of a polyolefin-type resin;
(d) 5 to 200 parts by mass of a polyphenylene ether-type resin; and
(e) 0 to 750 parts by mass of an inorganic filler.

2. The thermoplastic elastomer composition of Claim 1 for a vehicle window-molding, further comprising (f) 0.01 to 20 parts by mass of a polyorganosiloxane per 100 parts by mass of said thermoplastic elastomer composition.

3. The thermoplastic elastomer composition of Claims 1 or 2 for a vehicle window-molding, further comprising (g) 0.1 to 50 parts by mass of a polyurethane-type resin per 100 parts by mass of said thermoplastic elastomer composition.

4. The thermoplastic elastomer composition for a vehicle window-molding according to Claim 1, wherein said styrene-type thermoplastic elastomer (a) comprises hard blocks composed mainly of styrene-type monomer units and soft blocks composed mainly of conjugated diene monomer units and wherein said soft blocks consist mainly of butadiene units and/or isoprene units.

5. The thermoplastic elastomer composition for a vehicle window-molding according to Claim 1, wherein said non-aromatic rubber softener (b) is a paraffin-type process oil.

6. The thermoplastic elastomer composition for a vehicle window-molding according to Claim 1, wherein said polyolefin-type resin (c) is a polypropylene or a propylene-ethylene copolymer.

7. The thermoplastic elastomer composition for a vehicle window-molding according to Claim 1, wherein said polyphenylene-ether type resin (d) has an intrinsic viscosity from 0.08 to 0.90 g/dl.

8. The thermoplastic-elastomer composition for a vehicle window-molding according to Claim 1, wherein said polyphenylene-ether type resin (d) is poly(2,6-dimethyl-1,4-phenylene ether).

9. The thermoplastic elastomer composition for a vehicle window-molding according to Claim 1, wherein said inorganic filler (e) is calcium carbonate and/or talc.

10. The thermoplastic elastomer composition for a vehicle window-molding according to Claim 2, wherein said polyorganosiloxane (f) is a polydiorganosiloxane.

11. The thermoplastic elastomer composition for a vehicle window-molding according to Claim 3, wherein said polyurethane-type resin (g) is a thermoplastic polyurethane resin obtained through a reaction between a polymeric diol, a diisocyanate, and a chain extender.

12. The thermoplastic elastomer composition for a vehicle window-molding according to Claim 3, wherein said polyurethane-type resin (g) is a block copolymer and/or hydrogenation of the copolymer comprising hard blocks that composed mainly of styrene units, soft blocks that composed mainly of butadiene units and/or isoprene units, and polyurethane blocks.

13. A glass panel molding assembly for a vehicle, wherein a molding is integrally connected through a layer of an adhesive agent to a peripheral edge portion of a glass panel and wherein said molding is a product molded from the vehicle window-molding thermoplastic elastomer composition according to Claim 1.

## Patentansprüche

1. Eine thermoplastische Elastomerzusammensetzung für eine Fahrzeugfensterdichtung, enthaltend:
(a) 100 Massenteile eines thermoplastischen Elastomers vom Styroltyp mit einem zahlenmittleren Molekulargewicht gleich oder größer als 100.000;
(b) 30 bis 300 Massenteile eines nichtaromatischen Gummiweichmachers;
(c) 5 bis 150 Massenteile eines Harzes vom Polyolefintyp;
(d) 5 bis 200 Massenteile eines Harzes vom Polyphenylenethertyp und
(e) 0 bis 750 Massenteile eines anorganischen Füllstoffes.

2. Die thermoplastische Elastomerzusammensetzung gemäß Anspruch 1 für eine Fahrzeugfensterdichtung, außerdem enthaltend (f) 0,01 bis 20 Massenteile eines Polyorganosiloxans pro 100 Massenteile der thermoplastischen Elastomerzusammensetzung.

3. Die thermoplastische Elastomerzusammensetzung gemäß Anspruch 1 oder 2 für eine Fahrzeugfensterdichtung, außerdem enthaltend (g) 0,1 bis 50 Massenteile eines Harzes vom Polyurethantyp pro 100 Massenteile der thermoplastischen Elastomerzusammensetzung.

4. Die thermoplastische Elastomerzusammensetzung für eine Fahrzeugfensterdichtung gemäß Anspruch 1, wobei das thermoplastische Elastomer vom Styroltyp (a) harte Blöcke, die im Wesentlichen aus Styroltypmonomereinheiten zusammengesetzt sind und weiche Blöcke, die im Wesentlichen aus Monomereinheiten von konjugiertem Dien zusammengesetzt sind, enthält und wobei diese weichen Blöcke im Wesentlichen aus Butadieneinheiten und/oder Isopreneinheiten bestehen.

5. Die thermoplastische Elastomerzusammensetzung für eine Fahrzeugfensterdichtung gemäß Anspruch 1, wobei der nichtaromatische Gummiweichmacher (b) ein Weichmacheröl vom Paraffintyp ist.

6. Die thermoplastische Elastomerzusammensetzung für eine Fahrzeugfensterdichtung gemäß Anspruch 1, wobei das Harz vom Polyolefintyp (c) ein Polypropylen oder ein Propylen-Ethylen-Copolymer ist.

7. Die thermoplastische Elastomerzusammensetzung für eine Fahrzeugfensterdichtung gemäß Anspruch 1, wobei das Harz vom Polyphenylenethertyp (d) eine Grenzviskosität von 0,08 bis 0,90 g/dl hat.

8. Die thermoplastische Elastomerzusammensetzung für eine Fahrzeugfensterdichtung gemäß Anspruch 1, wobei das Harz vom Polyphenylenethertyp (d) Poly(2,6-dimethyl-1,4-phenylenether) ist.

9. Die thermoplastische Elastomerzusammensetzung für eine Fahrzeugfensterdichtung gemäß Anspruch 1, wobei der anorganische Füllstoff (e) Calciumcarbonat und/oder Talk ist.

10. Die thermoplastische Elastomerzusammensetzung für eine Fahrzeugfensterdichtung gemäß Anspruch 2, wobei das Polyorganosiloxan (f) ein Polydiorganosiloxan ist.

11. Die thermoplastische Elastomerzusammensetzung für eine Fahrzeugfensterdichtung gemäß Anspruch 3, wobei das Harz vom Polyurethantyp (g) ein thermoplastisches Polyurethanharz ist, erhalten durch eine Reaktion zwischen einem polymeren Diol, einem Diisocyanat und einem Kettenverlängerer.

12. Die thermoplastische Elastomerzusammensetzung für eine Fahrzeugfensterdichtung gemäß Anspruch 3, wobei das Harz vom Polyurethantyp (g) ein Blockcopolymer und/oder eine hydrierte Modifikation des Copolymers ist, enthaltend harte Blöcke, die im Wesentlichen aus Styroleinheiten zusammengesetzt sind, weiche Blöcke, die im Wesentlichen aus Butadieneinheiten und/oder Isopreneinheiten zusammengesetzt sind, und Polyurethanblöcke.

13. Eine Glasscheiben-Dichtungs-Anordnung für ein Fahrzeug, wobei eine Dichtung über eine Schicht eines Klebstoffes mit einem peripheren Randteil einer Glasscheibe integriert verbunden ist und wobei diese Dichtung ein Produkt ist, das aus der thermoplastischen Elastomerzusammensetzung für eine Fahrzeugfensterdichtung gemäß Anspruch 1 geformt ist.

## Revendications

1. Composition élastomère thermoplastique pour un moulage de fenêtre de véhicule comprenant :
(a) 100 parties en masse d'un élastomère thermoplastique de type styrène ayant une masse moléculaire moyenne en nombre égale ou supérieure à 100 000 ;
(b) 30 à 300 parties en masse d'un plastifiant de caoutchouc non aromatique ;
(c) 5 à 150 parties en masse d'une résine de type poly(oléfine) ;
(d) 5 à 200 parties en masse d'une résine de type poly(phénylène éther) ; et
(e) 0 à 750 parties en masse d'une charge inorganique.

2. Composition élastomère thermoplastique selon la revendication 1 pour un moulage de fenêtre de véhicule, comprenant en outre (f) 0,01 à 20 parties en masse d'un poly(organosiloxane) pour 100 parties en masse de ladite composition élastomère thermoplastique.

3. Composition élastomère thermoplastique selon la revendication 1 ou 2 pour un moulage de fenêtre de véhicule, comprenant en outre (g) 0,1 à 50 parties en masse d'une résine de type poly(uréthane) pour 100 parties en masse de ladite composition élastomère thermoplastique.

4. Composition élastomère thermoplastique pour un moulage de fenêtre de véhicule selon la revendication 1, dans laquelle ledit élastomère thermoplastique de type styrène (a) comprend des blocs durs composés principalement de motifs monomères de type styrène et des blocs souples composés principalement de motifs monomères de diène conjugué et où lesdits blocs souples sont constitués principalement de motifs butadiène et/ ou de motifs isoprène.

5. Composition élastomère thermoplastique pour un moulage de fenêtre de véhicule selon la revendication 1, dans laquelle ledit plastifiant de caoutchouc non aromatique (b) est une huile de traitement de type paraffine.

6. Composition élastomère thermoplastique pour un moulage de fenêtre de véhicule selon la revendication 1, dans laquelle ladite résine de type poly(oléfine) (c) est un poly(propylène) ou un copolymère de propylène-éthylène.

7. Composition élastomère thermoplastique pour un moulage de fenêtre de véhicule selon la revendication 1, dans laquelle ladite résine de type poly(phénylène éther) (d) a une viscosité intrinsèque de 0,08 à 0,90 g/dL.

8. Composition élastomère thermoplastique pour un moulage de fenêtre de véhicule selon la revendication 1, dans laquelle ladite résine de type poly(phénylène éther) (d) est le poly(2,6-diméthyl-1,4-phénylène éther).

9. Composition élastomère thermoplastique pour un moulage de fenêtre de véhicule selon la revendication 1, dans laquelle ladite charge inorganique (e) est du carbonate de calcium et/ou du talc.

10. Composition élastomère thermoplastique pour un moulage de fenêtre de véhicule selon la revendication 2, dans laquelle ledit poly(organosiloxane) (f) est un poly(diorganosiloxane).

11. Composition élastomère thermoplastique pour un moulage de fenêtre de véhicule selon la revendication 3, dans laquelle ladite résine de type poly(uréthane) (g) est une résine de poly(uréthane) thermoplastique obtenue par une réaction entre un diol polymère, un diisocyanate et un allongeur de chaîne.

12. Composition élastomère thermoplastique pour un moulage de fenêtre de véhicule selon la revendication 3, dans laquelle ladite résine de type poly(uréthane) (g) est un copolymère séquencé et/ou une hydrogénation du copolymère comprenant des blocs durs qui sont composés principalement de motifs styrène, des blocs souples qui sont composés principalement de motifs butadiène et/ou de motifs isoprène, et des blocs de poly(uréthane).

13. Ensemble de moulage de panneau en verre pour un véhicule, dans lequel un moulage est solidairement raccordé par l'intermédiaire d'une couche d'un agent adhésif à une partie de bord périphérique d'un panneau en verre et dans lequel ledit moulage est un produit moulé à partir de la composition élastomère thermoplastique de moulage de fenêtre de véhicule selon la revendication 1.
